# EUROPEAN PATENT APPLICATION

(11) **EP 3 487 256 A1**
(43) Date of publication of application: **22.05.2019**
(21) Application number: 17202634.6
(22) Date of filing: 20.11.2017
(51) Int. Cl.: H04W 76/10

(54) **METHODS AND DEVICES FOR ESTABLISHING A COMMUNICATION CONNECTION**

(71) Applicant: NTT DOCOMO, INC., Chiyoda-ku Tokyo 100-6150 (JP)
(72) Inventor: SAMA, Malla Reddy, 80687 Munich (DE); GUERZONI, Riccardo, 80687 Munich (DE); THAKOLSRI, Srisakul, 80687 Munich (DE); MUTIKAINEN, Jari, 80687 Munich (DE); MINOKUCHI, Atsushi, 80687 Munich (DE)
(74) Representative: Viering, Jentschura & Partner mbB Patent- und Rechtsanwälte

(57) **Abstract**

A method of establishing a communication session may include: receiving a message in a network component of a communication network by a Session Managing Function component to establish a new communication session, the Session Managing Function component sending a request message to a Policy Control Function component requesting an information as to whether the Policy Control Function component is configured in accordance with a radio communication technology providing Evolved Packet System Bearer Identifiers, the Session Managing Function component receiving a response message from the Policy Control Function component, the response message including a message field indicating as to whether an Evolved Packet System Bearer Identifier is required, and the Session Managing Function component sending a session establishment message to an Access and Mobility Management Function component to establish a communication session based on the Evolved Packet System Bearer Identifier in case it is included in the session establishment message.

## Description

### Technical Field

Various aspects of this disclosure relate generally to methods and devices for establishing a communication connection.

### Background

When establishing a new communication connection (e.g. a new communication session) in 5G, a component of the core network of the 5G mobile communication network needs to assign a so-called Evolved Packet System (EPS) Bearer Identifier (ID) (EBI) : a 4G parameter that will be used in case of handover to the 4G Evolved Packet Core (EPC). In 4G mobile radio communication networks, the number of EBIs is limited to 8, so that it may happen that the number of communication session in 5GC is higher than number of available EBIs in the EPC. The communication network therefore needs to decide to which communication session the available EBIs are assigned.

### Summary

A method of establishing a communication connection, the method including: receiving a message in a communication network component of a mobile radio communication network by a Session Managing Function component to establish a new communication session; the Session Managing Function component sending a request message to a Policy Control Function component requesting an information as to whether an Evolved Packet System Bearer Identifier for the connection is required for the communication connection; the Session Managing Function component receiving a response message from the Policy Control Function component, the response message comprising a message field indicating as to whether an Evolved Packet System Bearer Identifier is required; and the Session Managing Function component sending an Evolved Packet System Bearer Identifier assignment request message to an Access and Mobility Management Function component, the Session Managing Function component receiving a response message from the Access and Mobility Management Function component, the response message including a message field indicating the assigned Evolved Packet System Bearer Identifier.

### Brief Description of the Drawings

In the drawings, like reference characters generally refer to the same parts throughout the different views. The drawings are not necessarily to scale; emphasis is instead generally being placed upon illustrating the principles of the disclosure. In the following description, various embodiments of the disclosure are described with reference to the following drawings, in which:
FIG. 1 shows a message sequence diagram illustrating various messages provided to establish an EBI status of a communication connection in a 5G communication network during a communication session initiation process;
FIG. 2 shows a message sequence diagram illustrating a version of various messages provided to determine an EBI parameter of a communication connection in a 5G communication network during a communication session initiation process when the EBI status of the new session is established by the PCF; and
FIG. 3 shows a message sequence diagram illustrating a more detailed version of various messages provided to determine an EBI parameter of a communication connection in a 5G communication network during a communication session initiation process in the case of roaming.

### Description

In a mobile radio communication network in which generations of various communication networks coexist, User Equipment devices (UE) such as mobile phones, or components into devices that are connected to the mobile radio communication network including connected vehicles, and devices in the Internet of Things, may have to switch technology dynamically from a mobile radio communication network to another a mobile radio communication network where the two mobile radio communication networks are based on two different mobile radio communication network generations, such as 5G and 4G, without any service disruption for the mobile user.

This requirement highlights the need for compatibility mechanisms that allow UEs to move seamlessly between different radio communication networks.

An embodiment of such generation switch may be a network switch that happen when a UE moves from a 5G communication network to a 4G communication network. A 5G communication network has a much higher capacity than a 4G communication network. In the 5G communication network, a UE may maintain many more open communication connections than in a 4G communication network. Upon switching from a 5G communication network to a 4G communication network, some communication connections to the UE may continue to function, while others need to be dropped or suspended.

To control whether a communication connection may need to be dropped or may continue, at the time of creation of a new communication connection (e.g. when establishing a new communication session) in 5G, a component of the core network of the 5G mobile communication network needs to assign a so-called Evolved Packet System (EPS) Bearer Identifier (ID) (EBI), 4G parameter that will be used in case of handover to the 4G Evolved Packet Core (EPC). The EBI parameter is essentially an identifier of a User Plane bearer that the 4G communication core network, in other words the EPC, will use when the UE moves from the 5G communication network to the 4G communication network. Ultimately, the EBI status in 5G indicates whether the communication connection in 5G has a continuity property when the UE moves from a 5G communication network to a 4G communication network.

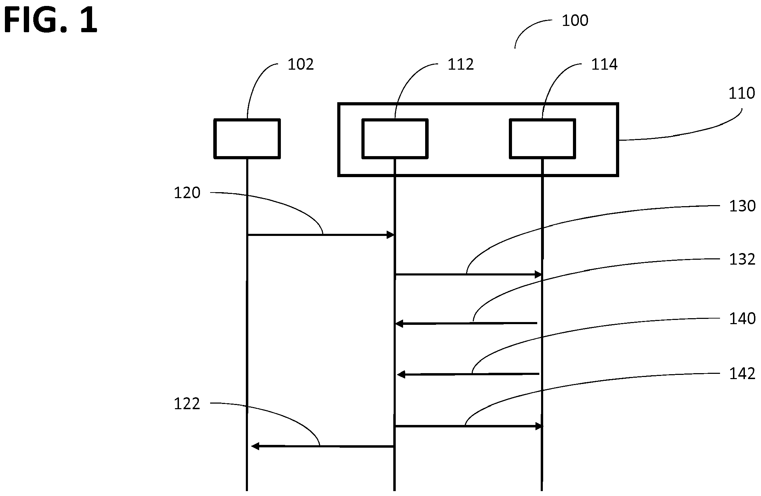

FIG.1 shows a message sequence diagram 100 illustrating various messages provided to determine, in other words generate, an EBI parameter of a communication connection in a 5G communication network during a Packet Data Unit (PDU) session establishment in accordance with 3GPP TS 23.502 titled "Procedures for the 5G System", Version **1.3.0.**

Various components are involved in the communication session initiation may be a mobile terminal, such as a UE 102, and a 5G communication core network 110 which include at least one Access Mobility Management Functions (AMF) component 112, and at least one Session Management Functions (SMF) component 114.

The UE 102 may generate the PDU communication session establishment request message 120 and may transmit the same to a component in the core network responsible for receiving the PDU communication session establishment request such as e.g. the AMF 112.

Upon receiving message 120, the AMF 112 may issue a PDU communication session creation request message 130 directed to the SMF 114. In other words, the AMF 112, may generate the PDU communication session creation request message 130 and may transmit the same to another component of the communication core network such as e.g. the SMF 114.

The SMF 114 upon receiving message 130 makes a determination about the EPI status of each communication connection associated with the PDU communication session using exclusively information that SMF 114 has available and then issues a PDU Create Context Response message 132 directed to the AMF 112 and a Communication EBI assignment message 140. Thus, the SMF may generate the PDU Create Context Response message 132 and the Communication EBI assignment message 140 for each communication connection associated with the PDU communication session and may transmit both messages 132, 140 to the AMF 112.

The AMF upon receiving the message 132 may attempt to assign the requested EBI to the communication connection of the PDU communication session for which the EBI was requested. Since in a 4G communication network, any UE may hold at most 8 EBI connections per established communication session, when the EBI is requested, the AMF 112 may verify the number of pre-existing connections requiring the EBI. When the number of pre-existing connections requiring the EBI is less than 8, the AMF 112 assigns the EBI requested; otherwise, when the number of pre-existing connections requiring the EBI is 8, the AMF 112 may reject the additional EBI request.

Upon assigning the EBI to the communication connection, the AMF 112 may issue an Update EBI message 142 directed to the SMF 114 and a communication to start or modify 122 a PDU communication session directed towards the UE 102. Thus, the AMF 112 may generate the Update EBI message 142 and may transmit the same to the SMF 114 and subsequently may start or modify 122 the PDU communication session for the UE 102.

Another option is that the SMF generates the Communication EBI assignment message 140, the AMF 112 generates the Update EBI message 142, the SMF generates the PDU Create Context Response message 132, and finally the AMF 112 starts or modifies 122 the PDU communication session for the UE 102.

The practical problem with this message sequence is that the EBI assignment is triggered by SMF 114 based on a local policy. It is impossible to achieve a coordination between different slices or different Access Point Name (APN) and Domain Network Name (DNN) handled by different SMFs.

An improved process can be achieved by moving the decision point on the assignment of the EBI to a so-called Policy Control Function (PCF) which is also located in the communication core network, since the PCF can take the prioritization between different communication network slices/DNNs into account.

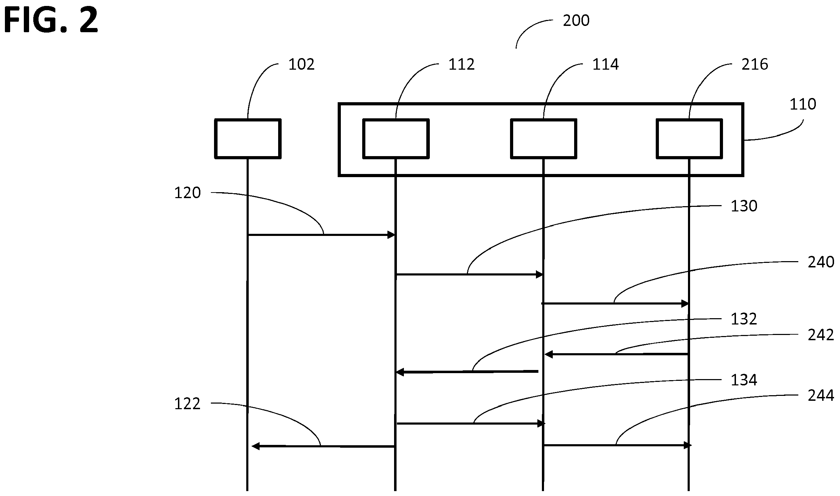

FIG. 2 shows a message sequence diagram 200 illustrating a version of various messages provided to establish an EBI parameter of a communication connection in a 5G communication network during a communication session initiation process when the EBI status of the new communication connection is established by the PCF.

The various components that are involved in the communication session initiation may be a mobile terminal, such as a UE 102, and a 5G communication core network 110 which include at least one Access Mobility Management Functions (AMF) component 112, at least one Session Management Functions (SMF) component 114 and at least one Policy Control Function (PCF) component 216.

The UE 102 may include any processor, circuit or component or module provided for mobile radio communication according to any desired mobile radio communication technology such as a 3G mobile radio communication technology, 4G mobile radio communication technology or even 5G mobile radio communication technology. By way of example, the UE 102 may include one or more antennas, one or more Radio Frequency (RF) Frontend circuits including e.g. one or a plurality of amplifiers such as e.g. one or a plurality of power amplifiers (PAs), one or a plurality of low noise amplifiers (LNAs). The UE 102 may further include one or a plurality of baseband circuits provided for baseband processing of the received signals or the signals to be transmitted. Furthermore, the UE 102 may include one or a plurality of application processors for higher level signal processing or the provision of application programs. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

In various aspects of this disclosure, the UE 102 starts the PDU communication session establishment with a PDU communication session establishment request message 120 directed to the AMF 112. In more detail, the UE 102 may generate the PDU communication session establishment request message 120 and may transmit the same to the AMF 112.

Upon receiving message 120, the AMF 112 issues a PDU communication session creation request message 130 directed to the SMF 114. In more detail, the AMF 112 may generate the PDU communication session creation request message 130 and may transmit the same to the SMF 114.

The SMF 114 upon receiving the message 130 may issue a get control policy message 240 directed to the PCF 216 requesting a decision on the EBI status of the PDU communication session in establishment. In more detail, the SMF 114 may generate the get control policy message 240 and may transmit the same to the PCF 116. In various embodiments, the get control policy message 240 may include a message field in the message header portion or an information encoded in the payload of the get control policy message 240 requesting a decision on the EBI status from the PCF 216.

The PCF 216, upon receiving the get control policy message 240, using its control policies makes a determination on the EBI status of each communication connection associated to the PDU communication session in establishment. In addition, the PCF 216 may issue an event exposure subscribe message 242 to the SMF 114 signalling the assigned EBI status. In other words, the PCF 216 may generate the event exposure subscribe message 242 and may transmit the same to the SMF 114. The event exposure subscribe message 242 may include a message field in the message header or information encoded in the payload of the event exposure subscribe message 242 indicating the assigned EBI status.

The SMF 114, upon receiving the event exposure subscribe message 242, may issue a PDU Create Context Response message 132 directed to the AMF 112 and a Communication EBI assignment message 140 also directed to the AMF 112. Thus, the SMF 114 may generate two messages, the PDU Create Context Response message 132 and the Communication EBI assignment message 140 for each communication connection associated with the PDU communication session and may transmit both messages 132, 242 to the AMF 112.

The AMF 112, upon receiving the message 132, may attempt to assign the requested EBI to the respective communication connection of the PDU communication session for which the EBI was requested. In case the EBI is requested, the AMF 112 may verify the number of pre-existing connections requiring the EBI are available for the UE 102, since in the 4G networks any UE 102 may hold at most 8 EBI connections per mobile radio communication session. When the constraint is not violated the AMF 112 may assign the EBI requested; otherwise, when the constraint is violated, the AMF 112 may reject the additional EBI request or may take any other desired action as a consequence of this situation.

Upon assigning the EBI to the communication connection, the AMF 112 may issue an Update EBI message 142 directed to the SMF 114, and a communication to start or modify 122 a PDU communication session directed towards the UE 102. In more detail, the AMF 112 may generate the Update EBI message 142 and may transmit the same to the SMF 114 and may then start or modify 122 a communication session, e.g. a PDU communication session with the UE 102.

Another option is that the SMF generates the Communication EBI assignment message 140, the AMF 112 generates the Update EBI message 142, the SMF generates the PDU Create Context Response message 132, and finally the AMF 112 starts or modifies 122 the PDU communication session for the UE 102.

The SMF 114, upon receiving the message 142, may issue an Update EBI message 244 directed to the PCF 216 informing the PCF 216 about the final EBI status of the PDU communication session.

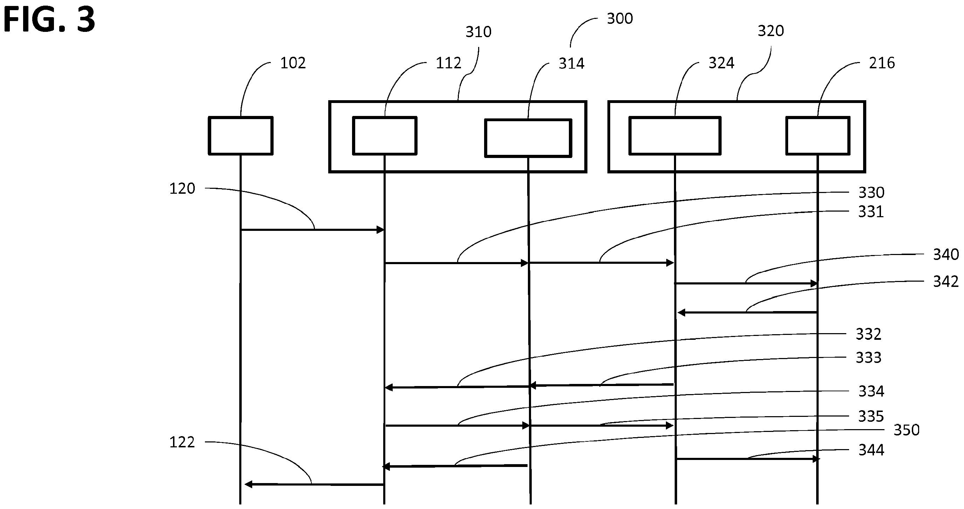

FIG.3 shows a message sequence diagram 300 illustrating a version of various messages provided to establish an EBI parameter of a communication connection in a 5G communication network during a communication session initiation process in the case of roaming.

The various components that are involved in the communication session initiation may be a mobile terminal, such as a UE 102; a Visiting 5G communication core network 310 which include at least one Visiting Access Mobility Management Functions (V-AMF) component 312, which may be functionally equivalent to the AMF 112 in FIG.1, and at least one Visiting Session Management Functions (V-SMF) component 314 which may be functionally equivalent to the SMF 114 in FIG.1; and a Home 5G communication core network 320 which includes at least one Home Session Management Functions (H-SMF) component 324 which may be functionally equivalent to the SMF 114 in FIG.1, and at least one Home Policy Control Function (H-PCF) component 216, which may be functionally similar or essentially identical to the PDF 216 in FIG.2. Where the Visiting 5G communication core network 310 is the core network of the mobile radio communication network in which the UE 120 is roaming into; while the Home 5G communication core network 320 is the core network of the mobile radio communication network from which the UE 102 is roaming from.

The UE 102 starts the PDU communication session establishment with a PDU communication session establishment request message 302 directed to the V-AMF 312. In more detail, the UE 102 may generate the PDU communication session establishment request message 302 and may transmit the same to the V-AMF 312.

Upon receiving message 302, the V-AMF 312 may issue a PDU communication session creation request message 330 to the V-SMF 314. In more detail, the V-AMF 312 may generate the PDU communication session creation request message 330 and may transmit the same to the V_SMF 314.

The V-SMF 314, upon receiving the PDU communication session creation request message 330, may issue a PDU communication session creation request message 331 to the H-SMF 324. In more detail, the V-SMF 314 may generate the PDU communication session creation request message 331 and may transmit the same to the H-SMF 324.

The H-SMF 324, upon receiving the PDU communication session creation request message 331, may issue a get control policy message 340 directed to the H-PCF 326 requesting a decision on the EBI status of each communication connection associated to the PDU communication session in establishment. In more detail, the H-SMF 324 may generate the get control policy message 340 and may transmit the same to the H-PCF 326. In various embodiments, the get control policy message 340 may include a message field in the message header portion or an information encoded in the payload of the get control policy message 340 requesting a decision on the EBI status from the H-PCF 326.

The H-PCF 326, after having received the get control policy message 340 and using its control policies makes a determination on the EBI status required by the PDU communication session in establishment.

Upon determining the EBI status of the PDU communication session in establishment, the H-PCF 326 may issue an event exposure subscribe message 342 directed to the H-SMF 324 signalling the assigned EBI status. In other words, the PCF 216 may generate the event exposure subscribe message 242 and may transmit the same to the H-SMF 324. The event exposure subscribe message 242 may include a message field in the message header or information encoded in the payload of the event exposure subscribe message 242 indicating the assigned EBI status.

The H-SMF 324, upon receiving the event exposure subscribe message 342, may issue a PDU Create Session Response message 333 directed to the V-SMF 314. In addition, the H-SMF 324 may issue a Communication EBI assignment message 353 directed to the V-SMF 314. Thus, the H-SMF 324 may generate two messages, the PDU Create Context Response message 333 and the Communication EBI assignment message 353 and may transmit both messages 333, 353 to the V-SMF 314.

The V-SMF 314, upon receiving messages 333 and 353, may issue a Communication EBI assignment message 352 directed to the V-AMF 312. In more detail, the V-SMF 314 may generate the Communication EBI assignment message 352 and may transmit the same to the V-AMF 312.

The V-AMF 312, upon receiving the Communication EBI assignment message 352 may attempt to assign the requested EBI to the respective communication connection of the PDU communication connection session for which the EBI was requested. In case the EBI is requested, the AMF 112 may verify the number of pre-existing communication connections requiring the EBI are available for the UE 102, since in the 4G networks any UE 102 may hold at most 8 EBI connections per communication session. When the constraint is not violated the V-AMF 312 assigns the EBI requested; otherwise, when the constraint is violated the V-AMF 312 may reject the additional EBI request or may take any other desired action as a consequence of this situation.

Upon assigning the EBI to the communication connection, the V-AMF 312 may issue an Update EBI message 354 directed to the V-SMF 314, and a communication 304 to start or modify the PDU communication session directed towards the UE 102. In more detail, the V-AMF 312 may generate the Update EBI message 354 and may transmit the same to the V-SMF 314 and may then start or modify the communication, e.g. a PDU communication session with the UE 102.

Another option is that the V-SMF generates the Communication EBI assignment message 352, the V-AMF 312 generates the Update EBI message 354, the SMF generates the PDU Session Establishment accept message 350, and finally the V-AMF 312 starts or modifies 304 the PDU communication session for the UE 102.

The V-SMF 314, upon receiving the Update EBI message 354, may issue a second Update EBI message 355 directed to the H-SMF 324. In more detail, the V-SMF 314 may generate the second Update EBI message 355 and may transmit the same to the H-SMF 324.

The H-SMF 324, upon receiving the second Update EBI message 355, may issue a third Update EBI message 344 directed to the H-PCF 326. In more detail, the H-SMF 324 may generate the third Update EBI message 344 and may transmit the same to the H-PCF 326.

In various embodiments, a method for allocation a EBI for a UE during the PDU session establishment procedure in a mobile communication network is provided. The method illustratively may include the following various aspects:
- a Radio Access Network (RAN) enabling a UE to access operator's mobile communication network;
- a UE accessing a mobile communication network
- a mobile core network consisting of a set of network functions further comprising:
   - an Access and Mobility management function (AMF) handling mobility management and mobile network access control for the UE to access mobile communication network;
   - a Session Management Function (SMF) handling session management for the UE to establish/modify/release a PDU session between the UE, the RAN and the Core Network (CN);
   - network function determining a policy for EBI allocation to the UE and providing the said policy for EBI allocation to the said SMF;
   - the said SMF determines whether a EBI allocation for a PDU session to establish is needed by taking the policy for EBI allocation into account. If needed, the SMF sends a EBI allocation request to the AMF;
   - the said AMF allocates EBI as requested by the said SMF.

The policy for EBI allocation may contain the EBI required indication for a particular QoS Flow in a PDU session.

In the following, various aspects of this disclosure will be illustrated:
Example 1 is a method of establishing a communication connection. The method may include receiving a message in a communication network component of a mobile radio communication network by a Session Management Function component to establish a new communication session, the Session Management Function component sending a request message to a Policy Control Function component requesting an information as to whether an Evolved Packet System Bearer Identifier for the connection is required for the communication connection, the Session Management Function component receiving a response message from the Policy Control Function component, the response message comprising a message field indicating as to whether an Evolved Packet System Bearer Identifier is required, and the Session Management Function component sending an Evolved Packet System Bearer Identifier assignment request message to an Access and Mobility Management Function component, the Session Management Function component receiving a response message from the Access and Mobility Management Function component, the response message including a message field indicating the assigned Evolved Packet System Bearer Identifier.
Example 2 is a method of establishing a communication session. The method may include a Policy Control Function component receiving a request message from a Session Managing Function component requesting an information as to whether an Evolved Packet System Bearer Identifier for the connection is required, the Policy Control Function component determining whether an Evolved Packet System Bearer Identifier for the connection indicated in the request message is required, in case an Evolved Packet System Bearer Identifier for the connection is required, generating an Evolved Packet System Bearer Identifier for the connection and transmitting the same to the Session Managing Function component in a response message.
In Example 3, the subject matter of Example 2 can optionally include that in case an Evolved Packet System Bearer Identifier for the connection is not required, generating a response message and transmitting the same to the Session Managing Function component indicating that no Evolved Packet System Bearer Identifier is required for the connection.
In Example 4, the subject matter of any one of Examples 2 or 3 can optionally include that determining whether an Evolved Packet System Bearer Identifier for the connection is based on a prioritization between different communication network slices and/or Domain Network Names into account.
Example 5 is a Session Managing Function device for establishing a communication session. The device may include a receiver configured to receive a message in a communication network component of a mobile radio communication network to establish a new communication session, a transmitter configured to transmit a request message to a Policy Control Function component requesting an information as to whether an Evolved Packet System Bearer Identifier for the connection is required, the receiver further configured to receive a response message from the Policy Control Function component, the response message comprising a message field indicating as to whether an Evolved Packet System Bearer Identifier is required, and the transmitter further configured to transmit a session establishment message to an Access and Mobility Management Function component to establish a communication session based on the Evolved Packet System Bearer Identifier in case it is included in the session establishment message.
Example 6 is a Policy Control Function device of establishing a communication session. The device may include a receiver configured to receive a request message from a Session Managing Function component requesting an information as to whether an Evolved Packet System Bearer Identifier for the connection is required, a determined configured to determine whether an Evolved Packet System Bearer Identifier for the connection indicated in the request message is required, a generator configured to generate an Evolved Packet System Bearer Identifier for the connection, in case an Evolved Packet System Bearer Identifier for the connection is required, and to transmit the Evolved Packet System Bearer Identifier to the Session Managing Function component in a response message.
In Example 7, the subject matter of Example 6 can optionally include that the generator is configured to generate a response message and to transmit the same to the Session Managing Function component indicating that no Evolved Packet System Bearer Identifier is required for the connection in case an Evolved Packet System Bearer Identifier for the connection is not required.
In Example 8, the subject matter of any one of Examples 6 or 7 can optionally include that the determiner is further configured to determine whether an Evolved Packet System Bearer Identifier for the connection based on a prioritization between different communication network slices and/or Domain Network Names into account.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A method of establishing a communication connection, the method comprising:
receiving a message in a communication network component of a mobile radio communication network by a Session Managing Function component to establish a new communication session;
the Session Managing Function component sending a request message to a Policy Control Function component requesting an information as to whether an Evolved Packet System Bearer Identifier for the connection is required for the communication connection;
the Session Managing Function component receiving a response message from the Policy Control Function component, the response message comprising a message field indicating as to whether an Evolved Packet System Bearer Identifier is required; and
the Session Managing Function component sending an Evolved Packet System Bearer Identifier assignment request message to an Access and Mobility Management Function component, the Session Managing Function component receiving a response message from the Access and Mobility Management Function component, the response message including a message field indicating the assigned Evolved Packet System Bearer Identifier.

2. A method of establishing a communication session, the method comprising:
a Policy Control Function component receiving a request message from a Session Managing Function component requesting an information as to whether an Evolved Packet System Bearer Identifier for the connection is required;
the Policy Control Function component determining whether an Evolved Packet System Bearer Identifier for the connection indicated in the request message is required;
in case an Evolved Packet System Bearer Identifier for the connection is required, generating an Evolved Packet System Bearer Identifier for the connection and transmitting the same to the Session Managing Function component in a response message.

3. The method of claim 2,
wherein in case an Evolved Packet System Bearer Identifier for the connection is not required, generating a response message and transmitting the same to the Session Managing Function component indicating that no Evolved Packet System Bearer Identifier is required for the connection.

4. The method of any one of claims 2 or 3,
wherein determining whether an Evolved Packet System Bearer Identifier for the connection is based on a prioritization between different communication network slices and/or Domain Network Names into account.

5. A Session Managing Function device for establishing a communication session, the device comprising:
a receiver configured to receive a message in a communication network component of a mobile radio communication network to establish a new communication session;
a transmitter configured to transmit a request message to a Policy Control Function component requesting an information as to whether an Evolved Packet System Bearer Identifier for the connection is required;
the receiver further configured to receive a response message from the Policy Control Function component, the response message comprising a message field indicating as to whether an Evolved Packet System Bearer Identifier is required; and
the transmitter further configured to transmit a session establishment message to an Access and Mobility Management Function component to establish a communication session based on the Evolved Packet System Bearer Identifier in case it is included in the session establishment message.

6. A Policy Control Function device of establishing a communication session, the device comprising:
a receiver configured to receive a request message from a Session Managing Function component requesting an information as to whether an Evolved Packet System Bearer Identifier for the connection is required;
a determined configured to determine whether an Evolved Packet System Bearer Identifier for the connection indicated in the request message is required;
a generator configured to generate an Evolved Packet System Bearer Identifier for the connection, in case an Evolved Packet System Bearer Identifier for the connection is required, and to transmit the Evolved Packet System Bearer Identifier to the Session Managing Function component in a response message.

7. The device of claim 6,
wherein the generator is configured to generate a response message and to transmit the same to the Session Managing Function component indicating that no Evolved Packet System Bearer Identifier is required for the connection in case an Evolved Packet System Bearer Identifier for the connection is not required.

8. The device of any one of claims 6 or 7,
wherein the determiner is further configured to determine whether an Evolved Packet System Bearer Identifier for the connection based on a prioritization between different communication network slices and/or Domain Network Names into account.
